# EUROPEAN PATENT APPLICATION

(11) **EP 4 596 258 A1**
(43) Date of publication of application: **06.08.2025**
(21) Application number: 24219695.4
(22) Date of filing: 13.12.2024
(51) Int. Cl.: B60C 9/00, B60C 9/20

(54) **PNEUMATIC TIRE**

(30) Priority: 31.01.2024 JP 2024013263
(71) Applicant: Toyo Tire Corporation, Itami-shi, Hyogo 664-0847 (JP)
(72) Inventor: TOCHIO, Sao, Itami-shi, Hyogo, 664-0847 (JP)
(74) Representative: Ricker, Mathias

(57) **Abstract**

A pneumatic tire according to an embodiment includes a belt ply (6) containing steel cords arranged to be inclined with respect to a tire circumferential direction, and a bending stiffness of the belt ply calculated by multiplying a bending stiffness per cord of the steel cords by a cord end count is 10 N/25.4 mm or more and less than 30 N/25.4 mm. A circumferential strength of the belt ply calculated by multiplying a product of a breaking load per cord of the steel cords and the cord end count by cosθ, where θ represents an inclination angle of the steel cords with respect to the tire circumferential direction, is 13.5 kN/25.4 mm or more.

## Description

### BACKGROUND OF THE INVENTION

### 1. Field of the Invention

The present invention relates to a pneumatic tire.

### 2. Description of Related Art

A pneumatic tire generally includes a belt formed of a laminate of a plurality of belt plies between the outer surface of a carcass ply and a tread rubber. Such a belt ply contains steel cords arranged to be inclined with respect to the tire circumferential direction. The belt is a member for tightening the carcass ply to increase the rigidity of the tread, and various proposals have been made for improving durability, steering stability, ride comfort, and the like.

For example, JP2020-104772A and JP2020-104773A propose that, in order to improve durability and ride comfort while reducing the tire mass, the cord diameter or filament diameter of the steel cords is specified, and also the cord bending stiffness and cord strength per steel cord, as well as the cord strength per belt ply, are set within specific ranges.

JP2011-051497A discloses that, for the purpose of improving road grip performance while maintaining durability, the filament diameter of the steel cords is reduced to 0.14 to 0.18 mm, and another belt ply with a larger cord angle is provided between the belt plies.

JPH08-169207A proposes that, in order to achieve improved high-speed durability and abrasion resistance simultaneously with excellent steering stability, each steel cord arrangement angle in at least two layers of belt plies is set within a specific range.

JP2010-047200A discloses that, for the purpose of improving steering stability and vibration ride comfort performance, the tire vertical spring constant is specified, and also the rigidity of the steel cords per unit width of the crossing belt layers is configured such that the cord tensile rigidity and the cord bending rigidity satisfy a specific relational expression.

### SUMMARY OF THE INVENTION

When the filament diameter of steel cords used in a belt is reduced to lower the bending stiffness, the conformability to the road surface improves, making it possible to improve steering stability. However, a smaller filament diameter leads to lower tensile strength, and the high-speed durability deteriorates. In addition, when the number of steel cord-constituting filaments is increased in order to maintain tensile strength, the bending stiffness of the belt ply increases, and the improving effect on steering stability is lost.

In light of the above points, an object of an embodiment of the invention is to provide a pneumatic tire capable of improving steering stability and also of maintaining or improving high-speed durability.

Incidentally, although JP2020-104772A and JP2020-104773A have description of the cord strength and bending stiffness of a belt ply, the bending stiffness exceeds the range specified in the invention, and it is considered not possible to simultaneously achieve high-speed durability and steering stability. JP2011-051497A describes that steel cords formed of thin filaments twisted together are used in a belt ply, but there is no specific description of the circumferential strength and bending stiffness of the belt ply. JPH08-169207A describes the bending rigidity per steel cord, but there is no specific description of the circumferential strength of the belt ply. In JP2010-047200A, there is no specific description of the breaking load of steel cords, and there also is no description of the circumferential strength considering the inclination angle of steel cords.

The invention includes the following embodiments.
[1] A pneumatic tire including a belt ply containing steel cords arranged to be inclined with respect to a tire circumferential direction, in which a bending stiffness of the belt ply calculated by multiplying a bending stiffness per cord of the steel cords by a cord end count is 10 N/25.4 mm or more and less than 30 N/25.4 mm, and a circumferential strength of the belt ply calculated by multiplying a product of a breaking load per cord of the steel cords and the cord end count by cosθ, where θ represents an inclination angle of the steel cords with respect to the tire circumferential direction, is 13.5 kN/25.4 mm or more.
[2] The pneumatic tire according to [1], in which the steel cords have a filament diameter of 0.15 mm or more and 0.17 mm or less, a steel cord occupancy in a width direction of the belt ply is 55% or more and 70% or less, and the inclination angle of the steel cords with respect to the tire circumferential direction is 15° or more and 30° or less.
[3] The pneumatic tire according to [1] or [2], in which filaments constituting the steel cords have a carbon content of 0.88 mass% or more and 0.95 mass% or less.

According to an embodiment of the invention, by reducing the bending stiffness of a belt ply while maintaining or improving the circumferential strength of the belt ply, it is possible to improve steering stability and also maintain or improve high-speed durability.

### BRIEF DESCRIPTION OF THE DRAWINGS

FIG. 1 is a half sectional view of a pneumatic tire according to one embodiment of the invention; and
FIG. 2 is a diagram for explaining the method for measuring the cord bending stiffness of a steel cord.

### DESCRIPTION OF EMBODIMENTS

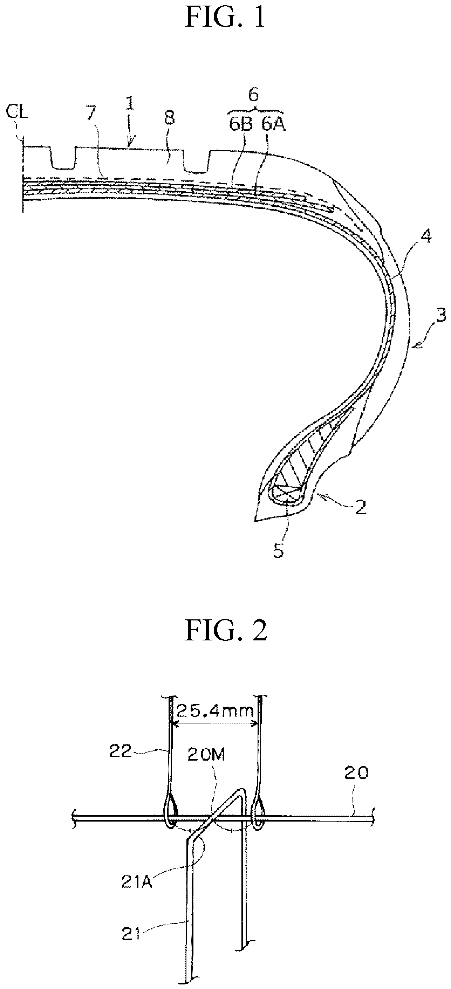

FIG. 1 is a half cross-sectional view showing, as an example of a pneumatic tire, a pneumatic radial tire for passenger cars. This tire includes a tread 1 that constitutes the footprint area, a pair of left and right bead portions 2, and a pair of left and right sidewalls 3 interposed between the tread 1 and the bead portions 2.

A carcass ply 4 that extends toroidally is provided between the pair of bead portions 2. The carcass ply 4 extends from the tread 1 through the sidewall 3 on each side and is anchored at the bead portion 2. Each end of the carcass ply 4 is wrapped up from the inside to the outside of a bead core 5 embedded in the bead portion 2 and thus anchored. The carcass ply 4 is composed of at least one ply formed of organic fiber cords arranged substantially at a right angle with respect to the tire circumferential direction.

On the outer periphery of the carcass ply 4 in the tread 1 (i.e., on the outer side in the tire radial direction), a belt 6 including two or more belt plies is provided. Further, on its outer periphery, a belt reinforcing layer 7 including organic fiber cords spirally wound at an angle of 0° to 5° with respect to the tire circumferential direction is provided. On the outer peripheral side of the belt reinforcing layer 7, a tread rubber 8 is provided. Incidentally, the belt reinforcing layer 7 may be a cap ply that covers the entire width of the belt 6, or may also be an edge ply that covers both ends of the belt 6. In addition, the belt reinforcing layer 7 may be also omitted.

As used herein, the tire circumferential direction refers to the direction along the circumference centered on the tire rotation axis. The tire radial direction refers to the direction perpendicular to the tire rotation axis. The tire width direction refers to the direction parallel to the tire rotation axis and is also called the tire axial direction.

The belt 6 is provided over the outer periphery of the crown portion of the carcass ply 4, and is composed of one or more belt plies. In this example, the belt 6 is composed of two belt plies, that is, a first belt ply 6A on the inner side in the tire radial direction and a second belt ply 6B on the outer side.

These belt plies 6A and 6B contain steel cords arranged to be inclined with respect to the tire circumferential direction. Specifically, the belt plies 6A and 6B are each formed of steel cords covered with rubber, in which the steel cords are arranged to be inclined at a certain angle with respect to the tire circumferential direction and be at predetermined intervals in the tire width direction. The two belt plies 6A and 6B are disposed such that the steel cords in one belt ply intersect those in the other belt ply, that is, such that the steel cords are inclined with respect to the tire circumferential direction in a symmetric manner.

In this embodiment, the bending stiffness of each of the belt plies 6A and 6B (hereinafter referred to as belt ply bending stiffness) is 10 N/25.4 mm or more and less than 30 N/25.4 mm. As a result of the belt ply bending stiffness being 10 N/25.4 mm or more, the out-of-plane rigidity of the belt 6 does not become too low, and an excellent footprint shape can be maintained. As a result of the belt ply bending stiffness being less than 30 N/25.4 mm, the conformability to the road surface shape improves. Therefore, excellent steering stability can be obtained.

The belt ply bending stiffness is preferably 12 to 28 N/25.4 mm, more preferably 15 to 27 N/25.4 mm, and still more preferably 18 to 25 N/25.4 mm.

As used herein, "belt ply bending stiffness" is the bending stiffness (N) per 25.4 mm (= 1 inch) belt ply width, and is calculated, as in the following formula, by multiplying the bending stiffness per cord of the steel cords by the cord end count. Belt ply bending stiffness (N/25.4 mm) = cord bending stiffness (N/cord) × cord end count (cords/25.4 mm)

As used herein, "cord bending stiffness" is a value defined with the maximum load when a single steel cord is bent at its center with a support span of 25.4 mm. The detailed measurement method is as described in the section of Examples.

As used herein, "cord end count" is the number of steel cords arranged per 25.4 mm (= 1 inch) belt ply width. Here, the belt ply width is not the dimension in the tire width direction, but refers to the belt ply width in the direction perpendicular to the longitudinal direction of steel cords in the plane of the belt ply. The longitudinal direction of steel cords refers to the direction along the linearly extending steel cords.

In this embodiment, in addition, the circumferential strength of each of the belt plies 6A and 6B (hereinafter referred to as belt ply circumferential strength) is 13.5 kN/25.4 mm or more. As a result of the belt ply circumferential strength being 13.5 kN/25.4 mm or more, an excellent footprint shape due to the hoop effect is likely to be obtained, and the high-speed durability can be maintained or improved.

The upper limit of the belt ply circumferential strength is not particularly limited, but is preferably 22.0 kN/25.4 mm. As a result of the belt ply circumferential strength being 22.0 kN/25.4 mm or less, an excessive increase in the cord end count can be suppressed, preventing the belt ply bending stiffness from becoming too high. In addition, adjacent steel cords in the belt ply can be prevented from becoming too close to each other, suppressing a decrease in durability due to belt separation.

The belt ply circumferential strength is more preferably 13.8 to 20.0 kN/25.4 mm, more preferably 14.0 to 19.0 kN/25.4 mm, and still more preferably 14.2 to 18.0 kN/25.4 mm.

As used herein, "belt ply circumferential strength" is the tensile strength of a belt ply in the tire circumferential direction per 25.4 mm in the tire width direction. As in the following formula, the belt ply circumferential strength is calculated by multiplying the product of the breaking load per cord of the steel cords (hereinafter referred to as cord breaking load) and the cord end count by cos θ, where θ (°) represents the inclination angle of the steel cords with respect to the tire circumferential direction. Belt ply circumferential strength (kN/25.4 mm) = cord breaking load (kN/cord) × cord end count (cords/25.4 mm) × cosθ

As used herein, "cord breaking load" refers to the maximum load required to break a single steel cord, which is measured in accordance with JIS G3510-1992.

As used herein, the inclination angle θ of steel cords is the cord angle of steel cords with respect to the tire circumferential direction as 0°, that is, the angle between the longitudinal direction of the steel cords and the tire circumferential direction. By multiplying the product of the cord breaking load and the cord end count by cosθ, the circumferential strength of the belt ply when in the form of a tire can be directly set, and the high-speed durability can be more reliably maintained or improved.

The steel cords constituting the belt plies 6A and 6B preferably have a filament diameter of 0.15 mm or more and 0.17 mm or less. As a result of the filament diameter being 0.15 mm or more, it is easier to set the belt ply bending stiffness to be not less than the above lower limit. As a result of the filament diameter being 0.17 mm or less, it is easier to set the belt ply bending stiffness to be not more than the above upper limit. The filament diameter is more preferably 0.155 to 0.165 mm.

It is preferable that the steel cord occupancy (hereinafter referred to as cord occupancy) in the width direction of the belt plies 6A and 6B is 55% or more and 70% or less. As a result of the cord occupancy being 55% or more, it is easier to enhance the belt ply circumferential strength. As a result of the cord occupancy being 70% or less, adjacent steel cords in the belt ply can be prevented from becoming too close to each other, suppressing a decrease in durability due to belt separation. The cord occupancy is more preferably 56 to 69%, and still more preferably 57 to 65%.

As used herein, "cord occupancy" is a value in a so-called topping cloth having steel cords aligned at a predetermined cord density and covered with rubber, which is calculated by the following formula. Accordingly, as in the case of the cord end count, the width direction of the belt ply regarding the cord occupancy is not the tire width direction, but refers to the width direction of the belt ply in the direction perpendicular to the longitudinal direction of steel cords in the plane of the belt ply. Cord occupancy (%) = cord diameter (mm) × cord end count (cords/25.4 mm) × 100/25.4 (mm).

The inclination angle θ of the steel cords in the belt plies 6A and 6B with respect to the tire circumferential direction is preferably 15° or more and 30° or less. As a result of the inclination angle being 15° or more, it is easier to maintain excellent steering stability. As a result of the inclination angle being 30° or less, it is easier to improve the steering stability while maintaining the belt ply circumferential strength. The inclination angle θ of the steel cords is more preferably 18° to 28°, and still more preferably 20° to 27°.

It is preferable that the steel cord-constituting filaments have a carbon content of 0.88 mass% or more and 0.95 mass% or less. That is, as a steel material used for the filaments, a carbon steel wire material having a carbon content of 0.88 to 0.95 mass% is preferably used. When the carbon content is higher, the steel is stronger and harder. When the filament diameter of the steel cords is reduced to reduce the belt ply bending stiffness as described above, thereby improving the steering stability, and also a high-strength material having a high carbon content is used, it is easier to improve the strength of the steel cords. Therefore, it is easier to maintain or improve the circumferential strength as a belt ply when in the form of a tire and maintain or improve the high-speed durability.

The carbon content in the filaments is more preferably 0.90 to 0.95 mass%. As carbon steel wire materials having such a high carbon content, for example, SWRS92A, SWRS87A, and the like specified in JIS G3502:2019 can be mentioned.

The cord structure of the steel cords is not particularly limited, but an m + n multilayer twisted structure composed of a core, which is formed of m filaments of the same diameter twisted together, and a sheath therearound, which is formed of n filaments of the same diameter twisted together, is preferable. Here, m is preferably 2 or 3, and n is preferably 6 to 9.

The cord bending stiffness per cord of the steel cords is not particularly limited and may be, for example, 50 to 160 cN/cord, 70 to 150 cN/cord, or 90 to 130 cN/cord.

The breaking load per cord of the steel cords is not particularly limited and may be, for example, 500 to 1,000 N/cord, or 600 to 800 N/cord.

The cord end count is not particularly limited and may be, for example, 18 to 30/25.4 mm, or 21 to 28/25.4 mm.

The kind of pneumatic tire according to the embodiment is not particularly limited, and a tire for passenger cars, for example, can be mentioned.

### Examples

Hereinafter, the invention will be described in further detail through examples, but is not limited to these examples.

### [Measurement Methods/Test Methods]

The measurement methods and test methods in the Examples are as follows.

### (Steel Cord/Belt Ply Test Method)

- Filament Diameter, Cord Diameter: The diameter of filaments (filament diameter) and the diameter of steel cords (cord diameter) are measured in accordance with JIS G3510-1992 using a predetermined thickness gauge.
- Carbon Content in Filaments: Measured by molten steel analysis. General matters regarding the analytical test and the method for collecting samples for the analysis are in accordance with JIS G0404:2014, Clause 8 (Chemical Composition).
- Cord Bending Stiffness: The bending stiffness per cord of steel cords was measured as follows. At room temperature, as shown in FIG. 2, with both ends free, an 80-mm-long steel cord 20 was supported with its center being suspended at positions spaced 25.4 mm apart by a support 22. A midpoint 20M of the support positions by the support 22 was brought into contact with a straight upper-side portion 21A of a fixed, inverted U-shaped jig 21 from below so as to intersect at a right angle. Here, the upper-side portion 21A is in the shape of a rod having a circular cross-section (diameter = 3.0 mm). From this state, using a tensile tester (Autograph manufactured by Shimadzu Corporation), the support 22 was pulled upward at a tensile speed of 500 mm/min, and, while bending the steel cord 20 by the jig 21, the load applied to the support 22 was measured. The average maximum load (cN) for n = 5 was taken as the cord bending stiffness (cN/cord).
- Belt Ply Bending Stiffness (N/25.4 mm): Calculated by multiplying the cord bending stiffness per cord of steel cords (N/cord) by the cord end count (cords/25.4 mm).
- Cord Breaking Load: In accordance with JIS G3510-1992, the strength and elongation properties of steel cords were measured using a tensile tester (Autograph manufactured by Shimadzu Corporation) under tensile conditions of a gripping distance of 250 mm and a tensile speed of 25 mm/min. The maximum load required for one steel cord to break was calculated as the cord breaking load (N/cord).
- Belt Ply Circumferential Strength (kN/25.4 mm): Calculated by multiplying the product of the cord breaking load (kN/cord) and the cord end count (cord/25.4 mm) by the cosine of the steel cord inclination angle.
- Steel Cord Inclination Angle: Using an uninflated tire, the angle of steel cords with respect to the tire circumferential direction (inclination angle with respect to the tire circumferential direction as 0°) on the tire equator CL (center in the width direction) of the tread was measured.

### (Tire Test Methods)

- Steering Stability: A prototype tire incorporated with an internal pressure of 200 kPa was mounted on a test vehicle with a displacement of 3,000 cc. Three trained test drivers drove the vehicle on a test course and evaluated the feelings. The steering stability was rated on a 10-point scale. The evaluation was made based on a relative comparison with the tire of Comparative Example 1 being rated as 6, and the average score of the three was expressed as an index relative to the evaluation result of the tire of Comparative Example 1 as 100. A larger number indicates better steering stability.
- High-Speed Durability: In accordance with FMVSS109 (UTQG), measurement was performed as follows using a drum tester having a 1,700-mm-diameter rotating drum made of steel with a smooth surface. A prototype tire was mounted on a standard rim specified in JIS with an internal pressure of 220 kPa, and the load was set to 88% of the maximum load specified in JATMA. After a break-in run for 60 minutes at a speed of 80 km/h, the tire was once left to cool, and the air pressure was adjusted again before the actual run. The actual run started at 120 km/h. The speed was then increased by 8 km/h every 30 minutes, and the tire was run until a failure occurred. The total running distance in the actual run until the occurrence of the failure was expressed as an index relative to the value of Comparative Example 1 as 100. The larger the index, the better the high-speed durability.

### [Examples and Comparative Examples]

A pneumatic radial tire with a tire size of 235/40ZR17 including the belt 6 with the two belt plies 6A and 6B as shown in FIG. 1 was prototyped by vulcanization molding in the usual manner. In the prototype tires, the belt ply configurations including the cord structure of steel cords were as shown in Tables 1 to 3, and other configurations were common to all. Incidentally, the twisting pitch of the steel cords was 9.7 mm. The inclination angle of the steel cords with respect to the tire circumferential direction was symmetric between the two belt plies 6A and 6B.

Using the obtained prototype tires, steering stability and high-speed durability were evaluated. The results are shown in Tables 1 to 3.

**[Table 1]**

| | Ex. 1 | Ex. 2 | Ex. 3 | Ex. 4 | Ex. 5 |
|---|---|---|---|---|---|
| Steel Cord/Belt Ply Configuration | | | | | |
| Cord Structure | 2 + 7 × 0.16 | 2 + 7 × 0.16 | 2 + 7 × 0.16 | 2 + 7 × 0.16 | 2 + 7 × 0.16 |
| Cord Diameter (mm) | 0.64 | 0.64 | 0.64 | 0.64 | 0.64 |
| Filament Carbon Content (mass%) | 0.90 | 0.90 | 0.90 | 0.90 | 0.90 |
| Cord Bending Stiffness (cN/cord) | 91 | 91 | 91 | 91 | 91 |
| Cord Breaking Load (N/cord) | 688 | 688 | 688 | 688 | 688 |
| Cord End Count (cords/25.4 mm) | 23 | 22 | 27.5 | 23 | 23 |
| Belt Ply Bending Stiffness (N/25.4 mm) | 21 | 20 | 25 | 21 | 21 |
| Steel Cord Inclination Angle (°) | 25 | 25 | 25 | 15 | 30 |
| Belt Ply Circumferential Strength (kN/25.4 mm) | 14.3 | 13.7 | 17.2 | 15.3 | 13.7 |
| Cord Occupancy (%) | 58 | 55 | 69 | 58 | 58 |

| Tire Evaluation (index) | | | | | |
|---|---|---|---|---|---|
| Steering Stability | 115 | 116 | 109 | 115 | 115 |
| High-Speed Durability | 102 | 100 | 103 | 104 | 100 |

**[Table 2]**

| | Ex. 6 | Ex. 7 | Ex. 8 | Ex. 9 | Ex. 10 |
|---|---|---|---|---|---|
| Steel Cord/Belt Ply Configuration | | | | | |
| Cord Structure | 2 + 7 × 0.15 | 2 + 7 × 0.17 | 2 + 7 × 0.16 | 2+ 7 × 0.16 | 2 + 7 × 0.16 |
| Cord Diameter (mm) | 0.61 | 0.68 | 0.64 | 0.64 | 0.64 |
| Filament Carbon Content (mass%) | 0.90 | 0.90 | 0.95 | 0.88 | 0.95 |
| Cord Bending Stiffness (cN/cord) | 51 | 126 | 91 | 91: | 91 |
| Cord Breaking Load (N/cord) | 621 | 777 | 794 | 646 | 794 |
| Cord End Count (cords/25.4 mm) | 24.3 | 21.7 | 23 | 23 | 27.5 |
| Belt Ply Bending Stiffness (N/25.4 mm) | 12 | 27 | 21 | 21 | 25 |
| Steel Cord Inclination Angle (°) | 25 | 25 | 25 | 25 | 15 |
| Belt Ply Circumferential Strength (kN/25.4 mm) | 13.7 | 15.3 | 16.6 | 13.5 | 21.1 |
| Cord Occupancy (%) | 58 | 58 | 58 | 58 | 69 |

| Tire Evaluation (index) | | | | | |
|---|---|---|---|---|---|
| Steering Stability | 102 | 108 | 115 | 115 | 105 |
| High-Speed Durability | 100 | 104 | 107 | 100 | 100 |

**[Table 3]**

| | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Steel Cord/Belt Ply Configuration | | | | | | |
| Cord Structure | 2 + 7 × 0.18 | 2 + 7 × 0.16 | 2 + 7 × 0.145 | 2 + 7 × 0.175 | 2 + 7 × 0.16 | 2 + 7 × 0.17 |
| Cord Diameter (mm) | 0.72 | 0.64 | 0.59 | 0.70 | 0.64 | 0.68 |
| Filament Carbon Content (mass%) | 0.85 | 0.90 | 0.90 | 0.85 | 0.90 | 0.95 |
| Cord Bending Stiffness (cN/cord) | 167 | 91 | 33 | 135 | 9t | 126 |
| Cord Breaking Load (N/cord) | 738 | 688 | 584 | 679 | 688 | 897 |
| Cord End Count (cords/25.4 mm) | 20.5 | 23 | 25.5 | 21 | 33 | 26 |
| Belt Ply Bending Stiffness (N/25.4 mm) | 34 | 21 | 8 | 28 | 30 | 33 |
| Steel Cord Inclination Angle (°) | 25 | 70 | 25 | 25 | 25 | 15 |
| Belt Ply Circumferential Strength (kN/25.4 mm) | 13.7 | 5.4 | 13.5 | 12.9 | 20.6 | 22.5 |
| Cord Occupancy (%) | 58 | 58 | 59 | 58 | 83 | 70 |

| Tire Evaluation (index) | | | | | | |
|---|---|---|---|---|---|---|
| Steering Stability | 100 | 115 | 90 | 105 | 99 | 98 |
| High-Speed Durability | 100 | 80 | 100 | 96 | 80 | 100 |

In Comparative Example 1 (control), the carbon content in filaments was 0.85 mass%, and the filament diameter of the steel cords was 0.18 mm. Although the belt ply circumferential strength met the specified range, the belt ply bending stiffness was more than the specified range, and the steering stability was inferior.

In Example 1, compared to Comparative Example 1, the filament diameter was reduced to 0.16 mm to reduce the belt ply bending stiffness, and, in addition, the carbon content in filaments was increased to 0.90 mass%. As a result, the belt ply circumferential strength improved. Therefore, compared to Comparative Example 1, while improving the steering stability, the high-speed durability also improved.

In Example 2, compared to Example 1, the cord end count was decreased, and, as a result, the belt ply circumferential strength reduced. In Example 3, compared to Example 1, the cord end count was increased, and, as a result, the belt ply circumferential strength increased. In Example 4, compared to Example 1, the inclination angle of the steel cords was reduced, and, as a result, the belt ply circumferential strength increased. In Example 5, compared to Example 1, the inclination angle of the steel cords was increased, and, as a result, the belt ply circumferential strength decreased. In all of these Examples 2 to 5, the belt ply bending stiffness and the belt ply circumferential strength satisfied the specified ranges. Accordingly, compared to Comparative Example 1, while maintaining or improving the high-speed durability, the steering stability improved.

In Example 6, compared to Example 1, the filament diameter was reduced to 0.15 mm, and also the cord end count was increased to adjust the cord occupancy. In Example 7, compared to Example 1, the filament diameter was increased to 0.17 mm, and also the cord end count was reduced to adjust the cord occupancy. In both of these Examples 6 and 7, the belt ply bending stiffness and the belt ply circumferential strength satisfied the specified ranges. Accordingly, compared to Comparative Example 1, while maintaining or improving the high-speed durability, the steering stability improved.

In Example 8, compared to Example 1, the carbon content in filaments was increased, and, as a result, the belt ply circumferential strength increased. In Example 9, compared to Example 1, the carbon content in filaments was reduced, and, as a result, the belt ply circumferential strength decreased. In Example 10, compared to Example 8, the cord end count was increased, and also the inclination angle of the steel cords was reduced. As a result, the belt ply circumferential strength further increased. In all of these Examples 8 to 10, the belt ply bending stiffness and the belt ply circumferential strength satisfied the specified ranges. Accordingly, compared to Comparative Example 1, while maintaining or improving the high-speed durability, the steering stability improved.

In Comparative Example 2, compared to Example 1, the inclination angle of the steel cords was increased, and, as a result, the belt ply circumferential strength was less than the specified range. Therefore, the high-speed durability was inferior. In Comparative Example 3, compared to Example 1, although the filament diameter was reduced, and also the cord end count was increased to adjust the cord occupancy, the belt ply bending stiffness was less than the specified range. Therefore, the steering stability was inferior.

In Comparative Example 4, compared to Comparative Example 1, the filament diameter was reduced. Although the belt ply bending stiffness decreased and met the specified range, the belt ply circumferential strength was less than the specified range, and the high-speed durability was inferior.

In Comparative Example 5, compared to Example 1, the cord end count was increased. As a result, the belt ply bending stiffness was more than the specified range, and no improvement in steering stability was observed. In addition, the belt separation performance worsened, and the high-speed durability deteriorated. In Comparative Example 6, in order to increase the belt ply circumferential strength, the filament diameter was increased, the cord end count was increased, and further the inclination angle of the steel cords was decreased compared to Example 1. As a result, the belt ply bending stiffness was more than the specified range, and the steering stability deteriorated. Incidentally, although the hoop effect improved due to the increased strength, because the cord end count and the cord occupancy were large, the high-speed durability did not improve and was on the same level as in Comparison Example 1.

Incidentally, with respect to the various numerical ranges described herein, the upper and lower limits thereof can be arbitrarily combined, and all such combinations are incorporated herein as preferred numerical ranges. In addition, the description of a numerical range "X to Y" means X or more and Y or less.

### Reference Signs List

1: Tread
2: Bead portion
3: Sidewall
4: Carcass ply
5: Bead core
6: Belt
6A, 6B: Belt ply
7: Belt reinforcing layer
8: Tread rubber

## Claims

1. A pneumatic tire comprising a belt ply containing steel cords arranged to be inclined with respect to a tire circumferential direction, wherein
a bending stiffness of the belt ply calculated by multiplying a bending stiffness per cord of the steel cords by a cord end count is 10 N/25.4 mm or more and less than 30 N/25.4 mm, and
a circumferential strength of the belt ply calculated by multiplying a product of a breaking load per cord of the steel cords and the cord end count by cosθ, where θ represents an inclination angle of the steel cords with respect to the tire circumferential direction, is 13.5 kN/25.4 mm or more.

2. The pneumatic tire according to claim 1, wherein the steel cords have a filament diameter of 0.15 mm or more and 0.17 mm or less, preferably 0.155 mm or more and 0.165 mm or less,
a steel cord occupancy in a width direction of the belt ply is 55% or more and 70% or less, preferably 56% or more and 69% or less, more preferably 57% or more and 65% or less, and
the inclination angle of the steel cords with respect to the tire circumferential direction is 15° or more and 30° or less, preferably 18° or more and 28° or less, more preferably 20° or more and 27° or less.

3. The pneumatic tire according to claim 1 or 2, wherein filaments constituting the steel cords have a carbon content of 0.88 mass% or more and 0.95 mass% or less, preferably 0.90 mass% or more and 0.95 mass% or less.

4. The pneumatic tire according to any one of claims 1 to 3, wherein the bending stiffness per cord of the steel cords is 50 to 160 cN/cord, preferably 70 to 150 cN/cord, more preferably 90 to 130 cN/cord.

5. The pneumatic tire according to any one of claims 1 to 4, wherein the breaking load per cord of the steel cords is 500 to 1,000 N/cord, preferably 600 to 800 N/cord.

6. The pneumatic tire according to any one of claims 1 to 5, wherein the cord end count is 18 to 30/25.4 mm, preferably 21 to 28/25.4 mm.

7. The pneumatic tire according to any one of claims 1 to 6, wherein the bending stiffness of the belt ply is 12 N/25.4 mm or more and 28 N/25.4 mm or less, preferably 15 N/25.4 mm or more and 27 N/25.4 mm or less, more preferably 18 N/25.4 mm or more and 25 N/25.4 mm or less.

8. The pneumatic tire according to any one of claims 1 to 7, wherein the circumferential strength of the belt ply is 13.5 kN/25.4 mm or more and 22.0 kN/25.4mm or less, preferably 13.8 kN/25.4 mm or more and 20.0 kN/25.4mm or less, more preferably 14.0 kN/25.4 mm or more and 19.0 kN/25.4mm or less, more preferably 14.2 kN/25.4 mm or more and 18.0 kN/25.4mm or less.
